# EUROPEAN PATENT SPECIFICATION

(11) **EP 2 798 268 B1**
(45) Date of publication and mention of the grant of the patent: **27.09.2017**
(21) Application number: 11862848.6
(22) Date of filing: 28.12.2011
(51) Int. Cl.: F22B 1/02, F22B 37/00, B21J 5/00, F16J 12/00, G21C 13/02, G21C 21/00, B21K 21/06, B21K 21/10, B21J 5/02, G21D 1/00

(54) **A METHOD FOR THE MANUFACTURE OF A VESSEL BOTTOM**
VERFAHREN ZUR HERSTELLUNG EINES BEHÄLTERBODENS
PROCÉDÉ POUR LA FABRICATION D'UN FOND DE RÉCIPIENT

(43) Date of publication of application: 05.11.2014
(73) Proprietor: Vítkovice Heavy Machinery A.S., 706 02 Ostrava-Vitkovice (CZ); Vysoká Skola Bánská - Technická Univerzita Ostrava, 708 33 Ostrava-Poruba (CZ)
(72) Inventor: PETRZELA, Jiri, 736 01 Havírov- Zivotice (CZ); LÁSZLÓ, Vladimir, 04414 Cana (Kosice okolie) (SK); CECHEL, Tomás, 735 06 Karviná Nové Mesto (CZ); GREGER, Miroslav, 708 00 Ostrava Poruba (CZ)
(74) Representative: Plicka, Josef
(86) International application number: PCT/CZ2011/000125
(87) International publication number: WO 2013/097837

(56) References cited:
- CN-A- 101 987 333
- CN-A- 102 019 338
- CN-A- 102 248 362
- JP-A- 61 052 946

## Description

### Technical Field of the Invention

The invention relates to a method for the manufacture of unwelded vessel bottoms, especially for steam generators and pressurizers in the field of a nuclear power.

### Background Art of the Invention

Said problem is hitherto solved in different ways.

According to one of them, a smooth bottom of the vessel is for example produced from thick-walled welded metal sheets. The starting metal sheets are bent on a roll bending machine. The metal sheets are welded in the middle by a longitudinal weld and a circular shape is burned out. In such a way a plate with a flat centre and raised edges is formed. The plate is inserted into the working space of a press and an appropriate bottom is pressed.

It is also used a similar procedure, where the welded thick sheets are bent into the shape of a cylindrical surface. A circular plate is cut from the bent metal sheets in the usual way. Supply and output tubes are then welded to the bottom surface.

The disadvantage of this approach is that during the production the material overcomes in the vicinity of these welds various transformations such as phase transformation or a change in the volume due to a thermal expansion of the material during welding. Due to these changes, tensile stresses may occur in the weld points and in vicinity of the weld causing cracks over time. In these places a reduction in mechanical properties of the materials occurs, as well as the loss of a creep resistance under load. This results in reduced service life of the relevant equipment and risk of damage during operation.

Another known technology is for example a solution according to the document CN 101987333 A, which describes the production of a circular plate by forging, where often a technology of changing the initial axis orientation in the forging is applied. Also document CN102019338A discloses a method for the manufacture of a vessel bottom in terms of a top cover element.

Also a process of producing a vessel bottom according to the document CS AO 256 653 is known, according to which a circular plate is cut from a hollow body of defined dimensions. After the forging the hollow body is cut longitudinally and unfolded, or a circular plate is directly cut on the surface of the hollow body, and subsequently unfolded. Then a smooth bottom is extruded and sockets eventually welded on.

The drawback is - in addition to the above-mentioned disadvantages - a lengthy production process.

One way of the production of vessel bottoms with sockets is the production with locally thickened wall thickness of the bottoms and with a mechanical machining the sockets.

These methods have the disadvantage in the discontinuity of material fibres in the orifices area, or in their unfavourable course in terms of operational stress.

Another disadvantage consists in a large consumption of steel, the initial semi-product is large, the production is very laborious and time-intensive on mechanical processing.

Vessel bottoms with welded orifices must undergo during their regular operation very demanding defectoscopy tests in weld areas.

Another art of production of vessels with sockets represents a swaging the bottoms with preliminary forged sockets.

The principle of this method of the production of vessel bottoms or other rotating bodies is that a lower fixed die block (female die) is mostly used, and an upper swage mostly in the shape of a plate revolves around the vertical axis.

As the input material serves mostly a preliminary forging in the shape of a cylinder - block, which is inserted into the lower instrument - the female die.

The upper tool (a rotary plate) is then gradually pushed into the log and rotated, the thickness of the block is thus reduced and the material is simultaneously extruded into the walls and also into the holes in the female die, which represent the future sockets. The turning the swage during forging is carried out between individual strokes.

In addition to the above disadvantages, the process is slow and inaccurate.

For the rotation movement a separate, usually electrical, drive and gear mechanism is used, which is technically quite difficult, because the device must be mounted on the moving cross head of the press.

In addition, there is a great danger of failures, because the device which must operate in an unpure environment is exposed to strong vibration and exposure to radiant heat.

The problem with this technology also lies in how to secure a constant - relatively precise -turning the rotary forging plates.

There are designs for a rotary tool, which is spontaneously rotating during the reverse movement of the upper tool by an appropriate section, but these tools increase the production costs.

Another variant of this technology consists is that the upper tool with a plate remains firm, but the female die is supported on a revolving table and the rotating movement is thus created by the female die.

However, the revolving table must be massive (must bear the weight of the female die and blank and also the pressure induced by the upper tool by the forming) and its acquisition price is too high.

The task of the invention in question is therefore to develop a method of manufacturing a vessel bottom, which will be free from the above deficiencies of prior art.

### Summary of the Invention

The above-mentioned task was solved according to this invention by developing a method of the production of a vessel bottom, especially for steam generators and pressurizers in a nuclear power, defined by appended claim 1 and inter alia comprising the following steps:
- after heating to a forming temperature a starting semi-product of the cylindrical shape is placed on the centre of the female die,
- through the pressure of the male die the preliminary forging is upset to a depth h to ensure the wall thickness b of a flattened segment,
- after the second heating to a forming temperature the flattened segment is placed back into the same female die,
- the first male die is replaced by a second male die
- by means of the pressure of the second male die the flattened segment is upset to a depth h,
- the second male die is released from a press ram and left pushed into the flattened segment,
- the second male die is fitted with a sleeve,
- the sleeve is pushed to a depth h for the creation - in collaboration with the second male die - the area of the vessel bottom.

The first male die has preferably the shape of a truncated cone with a rounded lower surface with a radius R₀ and rounded edges with a radius R₁.

The second male die has preferably the shape of a truncated cone with a rounded lower surface with a radius R₂.

The sleeve has preferably a rounded lower surface with a radius R₂.

The female die is preferably provided with a recess which has in cross-section the shape of a circular arc having a radius R.

The female die may be preferably provided with a recess having in cross-section the shape of an ellipse.

The recess of the female die is preferably equipped with further one or more recesses, having preferably the shape of a truncated cone.

Further recesses are preferably positioned at an angle α towards its vertical axis.

The angle α has preferably the size from 0 to 60°.

The sleeve is preferably formed as a split sleeve and consists of multiple partial sleeves.

Another partial sleeve is preferably attached on the previous sleeve and the procedure is repeated.

The advantage of the invention is that the forging of the vessel bottom with sockets contours the shape of the finish machined bottom.

Further advantage consists in that according to the method of the invention it is possible to manufacture very large bottoms of smooth forged pieces (stampings), forged pieces with sockets or similar forgings (stampings) larger than are allowed by the power capacity of the production equipment.

The upper tool is divided into the male die and sleeves in order to reduce the forming area, thus reducing the required forming forces.

It is also an advantage that the method allows the production of these vessel bottoms without welding day and the sockets have a continuous course of fibres.

Compared to a conventional method of manufacturing this type of bottom it is not necessary to use a time-consuming and energy-intensive production of an entry blank.

The new technology of a smooth vessel bottom or the one having s uses an entirely newly invented process of a gradual plugging the initial preliminary forging in the shape of a block by means of a gradual flattening through the male dies and subsequent inserting and pushing the sleeves.

### Brief Description of the Drawings

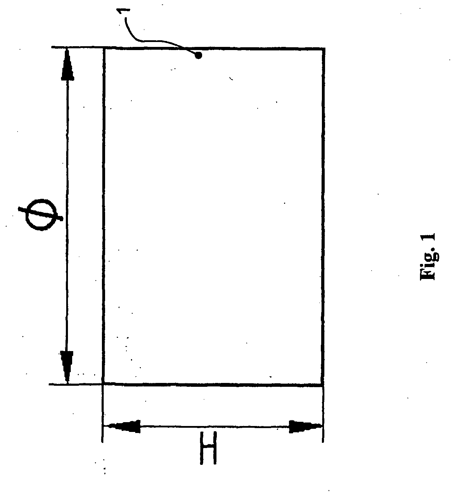

The present invention will be further explained on examples of its performance, the description will be given with regard to the enclosed drawings, where
Fig. 1 shows a perspective view at the preliminary forging having the shape of a block,

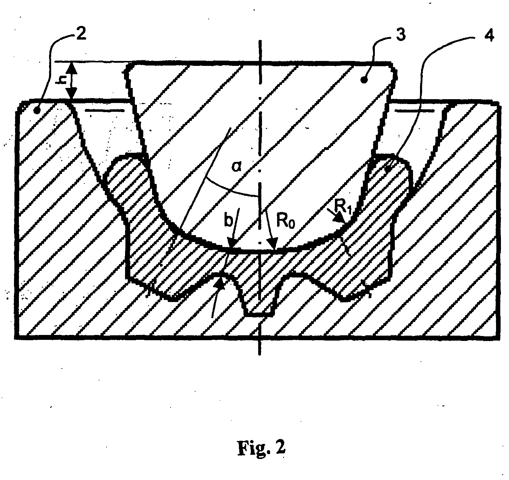

Fig. 2 shows a view in vertical axial section at the first assembly after pushing the first male die,

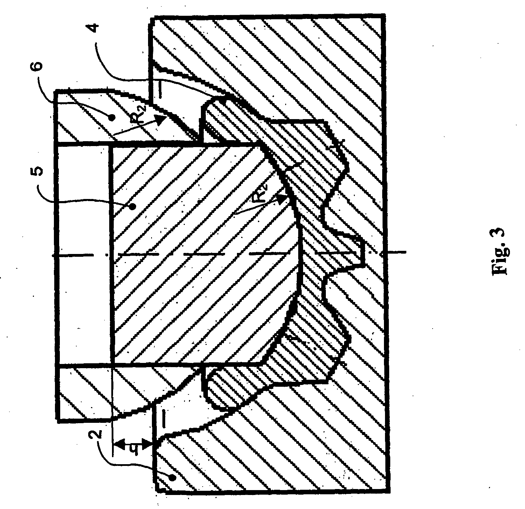

Fig. 3 shows a view in vertical axial section after pushing the second male die and inserting the sleeve.

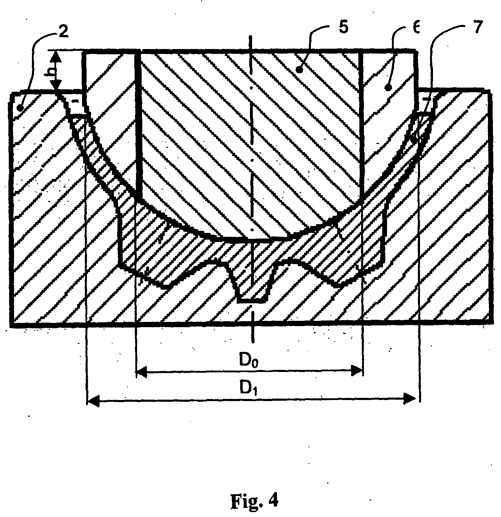

Fig. 4 shows a view in vertical axial section at the assembly after the final forging operation of the vessel bottom with sockets,

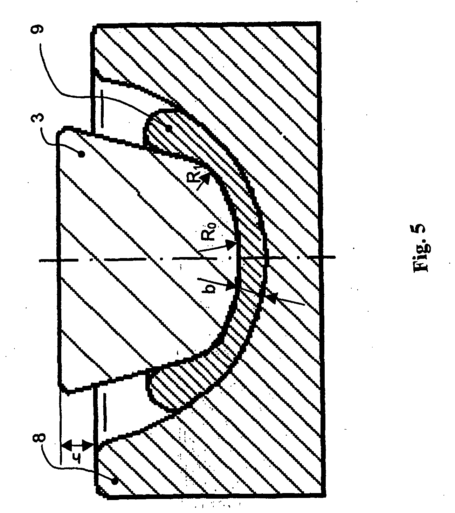

Fig. 5 shows a view in vertical axial section at the first assembly after pushing the first male die,

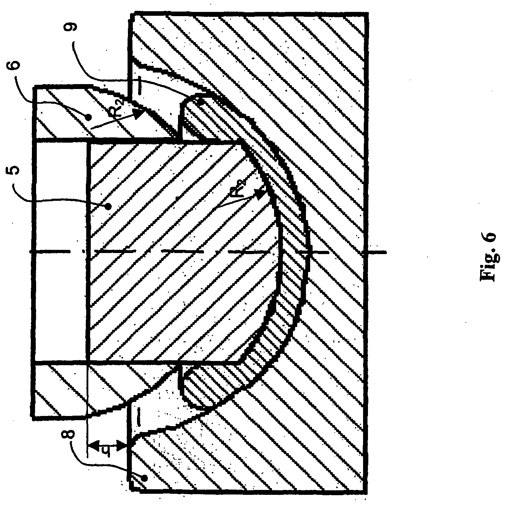

Fig. 6 shows a view in vertical axial section after pushing the second male die and inserting the sleeve,

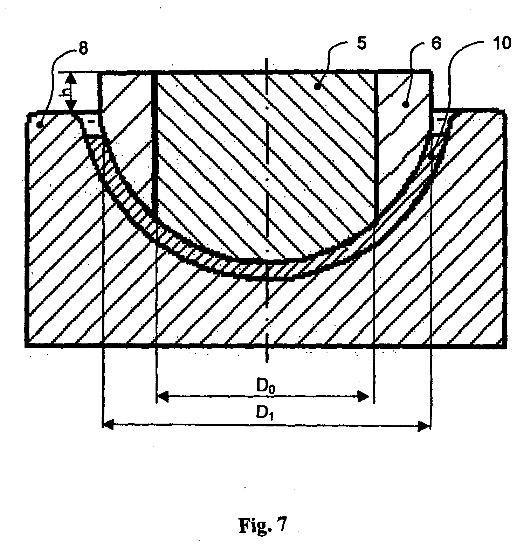

Fig. 7 show a view in vertical axial section at the assembly after the final forging operation of the smooth bottom of the vessel.

### Detailed Description of the Preferred Embodiments

According to this invention has thus been developed a method for the manufacture of the vessel bottom, the exemplary embodiment of which is shown in the above drawings.

The subject matter of the solution is that the material of the input blank in the form of a preliminary forging 1 in the shape of a cylinder or block having the ratio H: D = 1-2.5, is gradually and uniformly spread on the wall of a die block by means of male dies and sleeves.

The first male die 3 is pushed to a depth h, where h corresponds to the final thickness of the forged vessel bottom.

The first male die 3 is exchanged for the second male die 5 and the procedure is repeated, but the male die 5 remains pushed into the preliminary forging 1 and to this male die the first sleeve 6 is put. This is again pushed to the depth h.

By means of the sleeve 6 the diameter and wall thickness of the vessel bottom are finished. For vessel bottoms with an inner diameter D1 greater than a 1.5 multiple of the diameter D₀ of the second die male die 5, the sleeve 6 can be divided into multiple sleeves. Then the next sleeve is put on the previous one and the procedure is repeated.

After pushing the second male die 5 and all sleeves into the position h their external shape conforms to the required shape of the forged bottom.

The initial blank in the shape of a block is made by free forging, while for the bottom with two s positioned off-axis mirrored to each other the initial blank is further pressed in the radial direction by 20%. In such a way that uniform height around the perimeter of the bottom is achieved.

The principle of the method for the production of a vessel bottom consists in, that the preliminary forging 1 is placed after heating to the forming temperature in a vertical position on the centre of the female die 2 (or female die 8).

Through the pressure of the first male die 3 on the preliminary forgoing 1, heated to the forming temperature, the stamping is carried out to the position h, where h is determined in such a way that in the entire cross section is secured the required wall thickness of the forged vessel bottom.

The purpose of this first upsetting operation is especially to locate the metal evenly to all sides and in the case of forging the bottom with sockets, to secure that the metal fills up partially or completely the recesses - s.

Next an intermediate heating the flattened segment 4 (or the flattened segment 9) follows.

The first male die 3 is replaced for the second male die 5.

After the intermediate heating; the flattened segment 4 is placed back into the same female die 2 (or female die 8).

Through the pressure of the second male die 5 on the flattened segment 4 (or flattened segment 9), heated to the forming temperature, the upsetting is carried out until the position h.

Then the second male die 5 is released from the press ram and remains pushed in the flattened segment 5. On the other male die 5, the sleeve 6 is put.

Under the action of the pressure of the sleeve 6 on the flattened segment 4 (or flattened segment 9) a repressing the vessel bottom 7 with sockets (or smooth bottom 10) is performed is performed until the position h of the sleeve 6.

The sleeve 6 can be divided into multiple sleeves. The number of sleeves depends on the final bottom diameter and the magnitude of force of the used press.

After pressing through the first sleeve which remains free in the preliminary forging, the second sleeve is put on the first sleeve and the procedure is repeated. In the case of more sleeves the forging process through the following sleeve is repeated, as with the previous sleeve.

### Industrial Applicability

A method for the manufacture according to the present invention can be used for the manufacture of smooth bottoms and various bottoms with sockets where the sockets can have different locations, size, form and their number may be different, without welding these sockets on the bottom.

### List of reference characters

- 1: - preliminary forging
- 2: - female die
- 3: - first male die
- 4: - flattened segment
- 5: - second male die
- 6: - sleeve
- 7: - bottom 7 of the vessel with sockets
- 8: - female die
- 9: - flattened segment
- 10: - smooth bottom 10 of the vessel

- b: - thickness b of the wall of the preliminary forging 1
- h: - depth

- α: - angle α with respect to the vertical axis

- R₀: - radius
- R₁: - radius
- R₂: - radius

- D₀: - diameter
- D₁: - diameter

## Claims

1. A method for the manufacture of a vessel bottom, especially for steam generators and pressurizers in a nuclear power, comprising the following steps:
- after heating to a forming temperature a starting semi-product, preliminary forging (1) of the cylindrical shape, is placed on the centre of a female die (2),
- through the pressure of a first male die (3) the preliminary forging (1) is upset to a depth (h) to ensure the wall thickness (b) of a flattened segment (4),
- after the second heating to a forming temperature the flattened segment (4) is placed back into the same female die (2),
- the first male die (3) is replaced by a second male die (5),
- through the pressure of the second male die (5) the flattened segment (4) is upset to the depth (h),
- the second male die (5) is released from a press ram and left pushed into the flattened segment (4),
- a sleeve (6) is put on the second male die (5),
- the sleeve (6) is pushed to the depth (h) for the creation - in collaboration with the second male die (5) - the area of the vessel bottom.

2. The method according to claim 1, **characterized in that** the first male die (3) has the shape of a truncated cone with a rounded lower surface with a radius (R₀) and rounded edges with a radius (R₁).

3. The method according to claims 1 and 2, **characterized in that** the second male die (5) has the shape of a truncated cone with a rounded lower surface with a radius (R₂).

4. The method according to claims 1 to 3, **characterized in that** the sleeve (6) has a rounded lower surface with a radius (R₂).

5. The method according to claims 1 to 4, **characterized in that** the female die (2) is provided with a recess which has in cross-section the shape of a circular arc with a radius (R).

6. The method according to claims 1 to 5, **characterized in that** the female die (2) is provided with a recess which has in cross-section the shape of an ellipse.

7. The method according to claims 1 to 6, **characterized in that** the recess of the female die (2) is equipped with further one or more recesses having the shape of a truncated cone.

8. The method according to claims 1 to 7, **characterized in that** further recesses are positioned at an angle (α) towards the vertical axis.

9. The method according to claim 8, **characterized in that** the angle (α) has the size from 0 to 60°.

10. The method according to claims 1 to 9, **characterized in that** the sleeve (6) formed as a split sleeve and consists of multiple partial sleeves.

11. The method according to claims 1 to 10, **characterized in that** a further partial sleeve is put on the previous sleeve and the process is repeated.

## Patentansprüche

1. Verfahren zur Herstellung eines Behälterbodens, insbesondere für Dampfkessel und Volumenkompensatoren in Kernenergietechnik enthaltend folgende Schritte:
nach Erwärmung eines ursprünglichen zylindrischen Halberzeunisses auf Verformungstemperatur stellt man dieses Vorschmiedestück in den Mittelpunkt einer Matrize (2) auf,
durch Druckwirkung einer ersten Patrize (3) staucht man das Vorschmiedestück (1) in eine Tiefe (h) um dadurch eine Wandstärke (b) eines abgeflachten Segments (4) zu sichern,
nach zweiter Erwärmung auf Verformungstemperatur stellt man das abgeflachte Segment (4) in die gleiche Matrize zurück,
die erste Patrize (3) wird durch eine zweite Patrize (5) ersetzt,
durch Druckwirkung der zweiten Patrize (5) staucht man das abgeflachte Segment in die Tiefe (h),
die zweite Patrize wird aus dem Gleitsstück entnommen und man schiebt diese auf das abgeflachte Segment,
man setzt ein Gehäuse auf die zweite Patrize (5),
man schiebt das Gehäuse (6) in die Tiefe (h) um - in Kooperation mit der zweiten Patrize (5) - einen Behälterboden zu bilden.

2. Verfahren nach dem Patentanspruch 1, **dadurch gekennzeichnet, dass** die erste Patrize (3) die Form eines Kegelstumpfes mit einer abgerundeten Unterfläche von Radius (R₀) und mit den angerundeten Kanten von Radius (R₁) umfasst.

3. Verfahren nach den Patentansprüchen 1 und 2, dadurcht gekennzeichnt, dass die zweite Patrize (5) die Form eines Kegelstumpfes mit einer abgerundeten Unterfläche von Radius (R₂) besitzt.

4. Verfahren nach den Patentansprüchen 1 bis 3, **dadurch gekennzeichnet, dass** das Gehäuse (6) eine abgerundete Unterfläche von Radius (R₁) enthält.

5. Verfahren nach den Patenransprüchen 1 bis 4, **dadurch gekennzeichnet, dass** die Matrize (2) eine Ausnehmung, die im Durchschnitt die Form eines Kreisbogens von Radius (R) hat, aufweist.

6. Verfahren nach den Patentansprüchen 1 bis 5, **dadurch gekennzeichnet, dass** die Matrize (2) eine Ausnehmung, welche im Durchschnitt die Form einer Ellipse hat, aufweist.

7. Verfahren nach den Patentansprüchen 1 bis 6, **dadurch gekennzeichnet, dass** die Ausnehmung der Matrize (2) eine weitere Ausnehmung oder eine Reihe von Auanehmungen in Form eines Kugelstumpfes aufweist.

8. Verfahren nach den Patentansprüchen 1 bis 7, **dadurch gekennzeichnet, dass** die weitere Ausnehmungen im Winkel (α) in Richtung einer Vertikalachse angeordnet sind.

9. Verfahren nach dem Patentanspruch 8, **dadurch gekennzeichnet, dass** sich der Winkel (α) im Bereich von 0° bis 60 ° bewegt.

10. Verfahren nach den Patentansprüchen 1 bis 9, **dadurch gekennzeichnet, dass** das Gehäuse (6) als ein getrenntes Gehäuse ausgebildet ist und auch aus einer Reihe von Partialgehäusen besteht.

11. Verfahren nach den Patentansprüchen 1 bis 10, **dadurch gekennzeichnet, dass** das weitere Partialgehäuse auf dem vorhergehenden Gehäuse angeordnet ist, wobei sich dieser Verlauf wiederholt.

## Revendications

1. Procédé de fabrication d'un fond de récipient, préférentiellement pour une chaudière à vapeur, pour un compensateur de volume, lequel contient des étapes suivantes:
après un échauffage à une température de formation d'un demi-produit initial on place une pièce forgée préalable cylindrique (1) au centre d'une matrice (2),
par effet de pression de la première patrice (13) on refoule la pièce forgée préalable (1) dans une profondeur (h) afin d'assurer une épaisseur d'une paroi (b) du segment aplati (4),
après un deuxième chauffage à la température de formation on retourne le segment aplati (4) dans la même matrice,
la première patrice (3) est remplacée par une deuxième patrice (5),
par effet de pression de la deuxième patrice (5) on refoule le segment aplati (4) dans la profondeur (h),
la deuxième patrice (5) est dégagée d'un coulisseau et on la pousse sur le segment aplati (4),
un boîtier (6) est placé sur la deuxième patrice (5),
le boîtier (6) est poussé dans la profondeur (h) afin de créer - en collaboration avec la deuxième patrice (5) - une surface du fond de récipient.

2. Procédé selon la revendication 1, **caractérisé en ce que** la première patrice (3) est en forme d'un cône tronqué ayant une surface inférieure arrondie avec un rayon (R₀) et des arêtes arrondies avec un rayon (R₁).

3. Procédé selon les revendications 1 et 2, **caractérisé en ce que** la deuxième patrice (5) est en forme d'un cône tronqué ayant une surface inférieure arrondie avec un rayon (R₂).

4. Procédé selon les revendications 1 jusqu'au 3, **caractérisé en ce que** le boîtier (6) possède une surface inférieure avec un rayon (R₂).

5. Procédé selon les revendications 1 jusqu'au 4, **caractérisé en ce que** la matrice (2) est munie par un évidement ayant en coupe une forme d'un arc de cercle avec un rayon (R).

6. Procédé selon les revendications 1 jusqu'au 5, **caractérisé en ce que** la matrice (2) est munie par un évidement ayant en coupe une forme d'une ellipse.

7. Procédé selon les revendications 1 jusqu'au 6, **caractérisé en ce que** l'évidément de la matrice (2) est pourvu d'un autre évidément ou de plusieurs évidéments de forme d'une cône tronqué.

8. Procédé selon les revendications 1 jusqu'au 7, **caractérisé en ce que** les autres évidéments sont placées dans un angle (α) en direction de l'axe verticale.

9. Procédé selon la revendication 8, **caractérisé en ce que** l'angle (α) varie en étendue de 0° jusqu'au 60 °.

10. Procédé selon les revendications 1 jusqu'au 9, **caractérisé en ce que** le boîtier (6) est formé comme un boîtier divisé et qu'il consiste en plusieurs boîtiers partiels.

11. Procédé selon les revendications 1 jusqu'au 10, **caractérisé en ce que** le boîtier partiel suivant est arrangé sur le boîtier précédent et que cette opération est repétée.
